# EUROPEAN PATENT APPLICATION

(11) **EP 4 752 109 A1**
(43) Date of publication of application: **03.06.2026**
(21) Application number: 25219410.5
(22) Date of filing: 28.11.2025
(51) Int. Cl.: C01G 53/42

(54) **POSITIVE ELECTRODE ACTIVE MATERIALS, POSITIVE ELECTRODES, AND RECHARGEABLE LITHIUM BATTERIES**

(30) Priority: 02.12.2024 KR 20240176686
(71) Applicant: SAMSUNG SDI CO., LTD., Yongin-si, Gyeonggi-do 17084 (KR)
(72) Inventor: KANG, Byungwuk, 17084 Yongin-si (KR); LEE, Chaewon, 17084 Yongin-si (KR); KANG, Taegeun, 17084 Yongin-si (KR); KIM, Jinhwa, 17084 Yongin-si (KR)
(74) Representative: Maiwald GmbH

(57) **Abstract**

A positive electrode includes a positive electrode active material that includes a lithium nickel-based composite oxide and is in a form of a single particle. A ratio of a volume cumulative average particle diameter (D₅₀) of the positive electrode active material measured using a particle size analyzer to a grain size of the positive electrode active material measured using backscatter electron diffraction after ion milling of the positive electrode is 1.6 to 1.8.

## Description

### BACKGROUND

### 1. Field

Positive electrode active materials, positive electrodes including the positive electrode active materials, and rechargeable lithium batteries are disclosed.

### 2. Description of the Related Art

Rechargeable lithium batteries are used in portable information devices such as cell phones, laptop computers, and smart phones. Rechargeable lithium batteries are also included in other applications, such as in electric vehicles, where rechargeable lithium batteries provide high energy density and easy portability as a driving power source. Research has been conducted to use rechargeable lithium batteries with high energy density as driving power sources or power storage powers source for hybrid vehicles.

Various positive electrode active materials have been investigated to realize rechargeable lithium batteries for various applications. With the rapidly increasing demand for large-sized, high-capacity, or high-energy-density rechargeable lithium batteries, there is a need to develop positive electrode active materials that have increased capacity while ensuring stability and enabling operation at high voltages.

### SUMMARY

Provided are a positive electrode active material capable of implementing high density, high capacity, long cycle-life characteristics and high energy density, and a positive electrode and a rechargeable lithium battery including the same.

In some example embodiments, a positive electrode includes a positive electrode active material that includes a lithium nickel-based composite oxide and is in a form of single particles, wherein a ratio of a volume cumulative average particle diameter (D₅₀) of the positive electrode active material measured using a particle size analyzer to a grain size of the positive electrode active material measured using backscatter electron diffraction after ion milling of the positive electrode is about 1.6 to about 1.8.

In some example embodiments, a method for preparing a positive electrode active material includes (i) preparing a positive electrode active material precursor including a nickel-based composite hydroxide or a nickel-based composite oxide, the positive electrode active material precursor having a volume cumulative average particle diameter (D₅₀) of about 9 µm to about 25 µm; (ii) mixing the positive electrode active material precursor and a lithium raw material, (iii) subjecting the mixture of the positive electrode active material precursor and a lithium raw material to a first heat treatment to obtain a preliminary positive electrode active material in a form of secondary particles including a lithium nickel-based composite oxide and in which a plurality of primary particles are agglomerated, (iv) pulverizing the preliminary positive electrode active material to prepare a pulverized product; and (iv) performing a second heat treatment on the pulverized product to obtain a positive electrode active material in a form of single particles.

In some example embodiments, the positive electrode includes a current collector and the positive electrode active material layer on the current collector.

In some example embodiments, a rechargeable lithium battery including the positive electrode; a negative electrode; and an electrolyte is provided.

The positive electrode active material according to some example embodiments may maximize capacity, have minimized production cost, ensure long cycle-life characteristics, improve high-voltage characteristics, and improve high-temperature storage characteristics. A rechargeable lithium battery using the above-mentioned positive electrode active material can exhibit high initial charge/discharge capacity and efficiency even under high-voltage driving conditions, may have high energy density due to high pellet density, and may have long cycle-life characteristics.

### BRIEF DESCRIPTION OF THE DRAWINGS

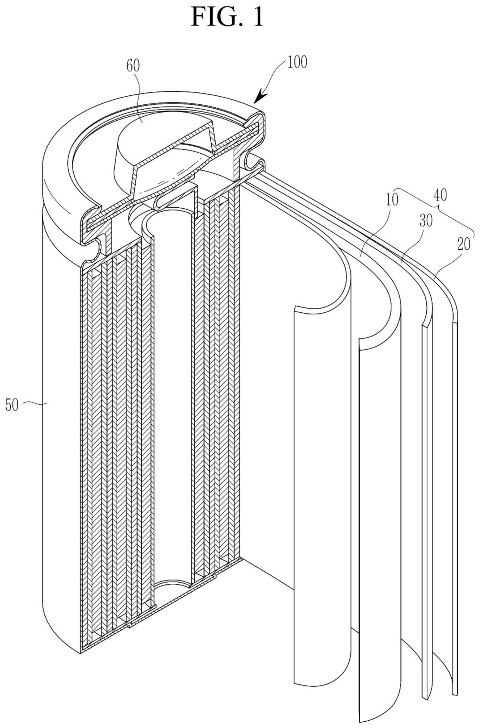

FIGS. 1 to 4 are schematic views showing rechargeable lithium batteries according to embodiments of the present disclosure.

### DETAILED DESCRIPTION

Hereinafter, specific embodiments will be described in detail so that those of ordinary skill in the art can easily implement them. However, this disclosure may be embodied in many different forms and is not limited to the example embodiments expressly set forth herein.

The terminology used herein is used to describe embodiments only and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

An average particle diameter as referred to herein may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating the average particle diameter from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Here, "or" is not to be construed as an exclusive meaning, for example, "A or B" is construed to include A, B, A+B, and the like.

"Metal" includes ordinary metals, transition metals and metalloids (semi-metals).

### Positive Electrode Active Material

In some example embodiments, a positive electrode active material includes a lithium nickel-based composite oxide and is in a form of single particles, wherein a ratio of a volume cumulative average particle diameter (D50) of the positive electrode active material measured using a particle size analyzer to a grain size of the positive electrode active material measured using backscatter electron diffraction after ion milling of an electrode including the positive electrode active material is about 1.6 to about 1.8.

In general, a positive electrode active material including a lithium nickel-based composite oxide in the form of single particles is prepared by using a precursor in a form of small single particles. But a rechargeable lithium battery including such a positive electrode active material may have problems such as low capacity and efficiency. Accordingly, embodiments of the present disclosure solve such problems by using a precursor in a form of large secondary particles and that are pulverized to prepare the positive electrode active material including a lithium nickel-based composite oxide in the form of single particles. The positive electrode active material prepared through this process has a grain size measured through backscatter electron diffraction, an average particle diameter (D₅₀) measured by a particle size analyzer, and a ratio thereof within certain ranges. And a rechargeable lithium battery including the positive electrode active material has been confirmed to exhibit excellent capacity and cycle-life characteristics.

According to some embodiments of the present disclosure, the positive electrode active material includes a lithium nickel-based composite oxide. For example, the lithium nickel-based composite oxide may be represented by the following chemical formula 1.

[Chemical Formula 1] Liₐ₁Niₓ₁M¹_{y1}M²_{z1}o_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² may each independently be one or more of Al, B, Ba, Ca, Ce, Co, Cr, Cu, Fe, Mg, Mn, Mo, Nb, Si, Sn, Sr, Ti, V, W, Y, Zn, and Zr, M¹ and M² may be different from each other, and X may be one or more of F, P, and S. In further embodiments with Chemical Formula 1, 0.6≤x1≤1, 0≤y1≤0.4, and 0≤z1≤0.4, or 0.8≤x1≤1, 0≤y1≤0.2, and 0≤z1≤0.2, or 0.9≤x1<1, 0<y1≤0.1, and 0≤z1≤0.1.

For example, the lithium nickel-based composite oxide may be a high nickel-based positive electrode active material having a nickel amount of greater than or equal to about 80 mol%, greater than or equal to about 85 mol%, greater than or equal to about 90 mol%, greater than or equal to about 91 mol%, greater than or equal to about 94 mol%, or greater than or equal to 99 mol% based on 100 mol% of a metal excluding lithium. The high-nickel positive electrode active materials can have high capacity and can be applied to high-capacity, high-density rechargeable lithium batteries.

The positive electrode active material including the lithium nickel-based composite oxide according to embodiments of the present disclosure is in the form of particles, the particles are in the form of single particles, and the single particles may have a spherical shape, an elliptical spherical shape, a polyhedral shape, or an irregular shape. The single particles may exist alone without grain boundaries within the particles, each be composed of one particle, and may be expressed as a single particle, a monolith structure, a one body structure, or a non-agglomerated particle in which particles are not agglomerated with each other but exist as an independent phase in terms of morphology. Further, the single particles may be expressed as a one body particle or single grain, for example, as a single crystal. The single particles may exist alone, or the single particles may be agglomerated together. For example, 2 to 10 single particles may be agglomerated and in contact with each other.

Based on 100 wt% of a total lithium nickel-based composite oxide according to embodiments of the present disclosure, an amount of lithium remaining on the surfaces of the single particles containing the lithium nickel-based composite oxide may be about 1000 ppm or higher, for example, about 1500 ppm to about 2500 ppm. Specifically, based on 100 wt% of the total lithium nickel-based composite oxide, an amount of LiOH remaining on the surfaces of a single particles including the lithium nickel-based composite oxide may be about 0.2 wt% or higher, for example, about 0.2 wt% to about 0.5 wt% or about 0.3 wt% to about 0.5 wt%. Further, based on 100 wt% of the total lithium nickel-based composite oxide, an amount of Li₂CO₃ remaining on the lithium nickel-based composite oxide surface may be about 0.3 wt% or higher, for example, about 0.3 wt% to about 1.0 wt% or about 0.4 wt% to about 1.0 wt%. Each of the amounts of the residual lithium, LiOH, and Li₂CO₃ may be measured by HCl titration.

In some embodiments, a ratio of a volume cumulative average particle diameter (D₅₀) of the positive electrode active material measured using a particle size analyzer to a grain size of the positive electrode active material measured using backscatter electron diffraction after ion milling of an electrode including the positive electrode active material is in a range of from about 1.6 to about 1.8, for example, about 1.65 to about 1.8, or about 1.66 to about 1.8. For example, after ion milling of an electrode including the positive electrode active material, the grain size of the positive electrode active material measured through backscatter electron diffraction may be about 1.3 µm to about 2.5 µm. More specifically, the grain size of the positive electrode active material may be about 1.4 µm to about 2.3 µm, about 1.5 µm to about 2.1 µm, about 1.55 µm to about 1.8 µm, about 1.55 µm to about 1.7 µm, about 1.6 µm to about 1.9 µm, or about 1.6 µm to about 1.7 µm. Here, the grain size may be measured through electron backscatter diffraction (EBSD) analysis. The EBSD measurement equipment may be, for example, a QUANTAX EBSD by Bruker Corporation, and the sample may be subjected to ion milling using a cross-section polisher (CP) such as an Ilion by Gatan, Inc. EBSD may be measured, for example, using an e-flash HR EBSD detector by Bruker Corporation at an acceleration voltage of 20 keV. The grain size may refer to the size of the single particle measured by EBSD. In this case, the electrolyte spreads evenly rather than clumping together in specific areas, reducing surface deterioration and extending the high temperature cycle-life.

The volume cumulative average particle diameter (D₅₀) of the positive electrode active material may be about 2.0 µm to about 4.0 µm, for example, about 2.2 µm to about 3.8 µm, about 2.4 µm to about 3.6 µm, about 2.6 µm to about 3.4 µm, or about 2.8 µm to about 3.2 µm. Here, the volume cumulative average particle diameter (D₅₀) may be measured by a particle size analyzer (PSA) for the positive electrode active materials, and the diameter of particles having a cumulative volume of 50 volume% in the particle size distribution can be taken as the average particle diameter.

The D₁₀ of the positive electrode active material may be about 1.0 µm to about 2.5 µm, for example, about 1.1 µm to about 2.4 µm, about 1.2 µm to about 2.3 µm, about 1.3 µm to about 2.2 µm, about 1.4 µm to about 2.1 µm, or about 1.5 µm to about 2.0 µm. D₁₀ is the diameter of particles having a cumulative volume of 10 volume% in the particle size distribution and may be measured by a particle size analyzer for positive electrode active materials.

The D₉₀ of the positive electrode active material may be about 4.0 µm to about 7.0 µm, for example about 4.2 µm to about 6.8 µm, about 4.4 µm to about 6.6 µm, about 4.6 µm to about 6.4 µm, or about 4.8 µm to about 6.2 µm. Here, D90 is the diameter of particles having a cumulative volume of 90 volume% in the particle size distribution and can be measured by a particle size analyzer for positive electrode active materials.

A span value of the positive electrode active material may be about 1.0 to about 1.4, for example about 1.0 to about 1.3, about 1.0 to about 1.2, or about 1.0 to about 1.1. Here, the span value is calculated as (D₉₀-D₁₀)/D₅₀ .

### Method of Preparing Positive Electrode Active Material

In embodiments of the present disclosure, a method of preparing a positive electrode active material includes (i) preparing a positive electrode active material precursor including a nickel-based composite hydroxide or a nickel-based composite oxide and having an average particle diameter (D₅₀) of about 9 µm to about 25 µm; (ii) mixing the positive electrode active material precursor and a lithium raw material and subjecting the mixture to first heat treatment to obtain a preliminary positive electrode active material in a form of secondary particles including a lithium nickel-based composite oxide and in which a plurality of primary particles are agglomerated, then pulverizing the material to prepare a pulverized product; and (iii) performing a second heat treatment on the pulverized product to obtain a positive electrode active material in a form of single particles.

The nickel-based composite hydroxide or nickel-based composite oxide is a precursor of a positive electrode active material and may be in the form of secondary particles in which a plurality of primary particles are agglomerated. The average particle diameter (D₅₀) of the secondary particles may be about 9 µm to about 25 µm, about 11 µm to about 20 µm, or about 12 µm to about 18 µm. When the average particle diameter (D₅₀) of the precursor of the positive electrode active material is within these ranges, the positive electrode active material in the form of single particles is prepared through a pulverization process, and the grain size is measured through backscatter electron diffraction, the volume cumulative average particle diameter (D₅₀) is measured through a particle size analyzer, and the ratio thereof are within the above ranges, a rechargeable lithium battery including the positive electrode active material can be produced that has excellent capacity and cycle-life characteristics.

The positive electrode active material precursor may be a high-nickel positive electrode active material precursor having a nickel amount of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of metal excluding lithium in the nickel-based composite hydroxide or nickel-based composite oxide.

The nickel-based composite hydroxide may be represented, for example, by Chemical Formula 2.

[Chemical Formula 2] Niₓ₂M³_{y2}M⁴_{z2}(OH)₂

In Chemical Formula 2, 0.3≤x2≤1, 0≤y2≤0.7, 0≤z2≤0.7, and 0.9≤x2+y2+z2≤1.1, M³ and M⁴ are each independently one or more of Al, B, Ba, Ca, Ce, Co, Cr, Cu, Fe, Mg, Mn, Mo, Nb, Si, Sn, Sr, Ti, V, W, Y, Zn, and Zr, and M³ and M⁴ may be different from each other. In further embodiments with Chemical Formula 2, 0.6≤x2≤1, 0≤y2≤0.4, and 0≤z2≤0.4, or 0.8≤x2≤1, 0≤y2≤0.2, and 0≤z2≤0.2, or 0.9≤x2<1, 0<y2≤0.1, and 0≤z2≤0.1.

The nickel-based composite oxide may be represented, for example, by Chemical Formula 3.

[Chemical Formula 3] Niₓ₃M⁵_{y3}M⁶_{z3}O

In Chemical Formula 3, 0.3≤x3≤1, 0≤y3≤0.7, 0≤z3≤0.7, and 0.9≤x3+y3+z3≤1.1, M⁵ and M⁶ are each independently one or more of Al, B, Ba, Ca, Ce, Co, Cr, Cu, Fe, Mg, Mn, Mo, Nb, Si, Sn, Sr, Ti, V, W, Y, Zn, and Zr, and M⁵ and M⁶ may be different from each other. In further embodiments with Chemical Formula 3, 0.6≤x3≤1, 0≤y3≤0.4, and 0≤z3≤0.4, or 0.8≤x3≤1, 0≤y3≤0.2, and 0≤z3≤0.2, or 0.9≤x3<1, 0<y3≤0.1, and 0≤z3≤0.1.

The methods according to the present disclosure include mixing the positive electrode active material precursor and a lithium raw material and subjecting mixture to first heat treatment to obtain a preliminary positive electrode active material in a form of secondary particles including a lithium nickel-based composite oxide and in which a plurality of primary particles are agglomerated.

In the first heat treatment process, the positive electrode active material precursor and the lithium raw material may be mixed in a molar ratio of about 1:0.9 to about 1:1.8, for example, in a molar ratio of about 1:0.9 to about 1:1.5 or about 1:1 to about 1:1.2. The first heat treatment can be carried out in an oxygen atmosphere, and may be performed at a temperature range of, for example, from about 750 °C to about 950 °C, or about 760 °C to about 900 °C, or about 770 °C to about 850 °C. The first heat treatment may be performed for about 2 hours to about 20 hours, or about 4 hours to about 12 hours.

In the preliminary positive electrode active material, the volume cumulative average particle diameter (D₅₀) of the secondary particles may be about 10 µm to about 17 µm. The volume cumulative average particle diameter (D₅₀) of the primary particles forming the secondary particles may be about 1 µm to about 5 µm.

The methods of the present disclosure include pulverizing the preliminary positive electrode active material obtained through the first heat treatment to produce a pulverized product. Then the pulverized product is subjected to a second heat treatment.

The pulverizing may include pulverizing using, for example, a jet mill by Hosokawa Alpine Group (Blower 35Hz, AFG 8000 rpm, Air 4 kgf/cm²) to create a product in the form of small particles having a particle size of about 3 µm to about 4 µm after pulverizing.

The second heat treatment may be performed in an oxygen atmosphere, and may be performed at a temperature range of, for example, from about 600 °C to about 900 °C, or about 610 °C to about 800 °C, or about 620 °C to about 700 °C. The second heat treatment may be performed for about 2 hours to about 20 hours or about 4 hours to about 18 hours.

A positive electrode active material in a form of single particles may be prepared through a second heat treatment of the pulverized product. After an electrode manufactured using the prepared positive electrode active material is subjected to ion milling treatment, a ratio of the volume cumulative average particle diameter of the positive electrode active material measured using a particle size analyzer to the grain size measured using backscatter electron diffraction may be about 1.6 to about 1.8.

### Positive Electrode

In some embodiments of the present disclosure, a positive electrode includes a current collector and a positive electrode active material layer on the current collector, wherein the positive electrode active material layer includes the aforementioned positive electrode active material. The positive electrode active material layer may further include other types of positive electrode active materials in addition to the aforementioned positive electrode active material. Additionally, the positive electrode active material layer may further include a binder, a conductive material, or a combination thereof.

### Binder

The binder improves binding properties of positive electrode active material particles with one another and with a current collector. Examples of binders include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon. But the present disclosure is not limited to these examples.

### Conductive Material

The conductive material is included to provide electrode conductivity and any electrically conductive material may be used as a conductive material that does not cause a chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amounts of the binder and conductive material may be about 0.5 wt% to about 5 wt%, based on 100 wt% of the positive electrode active material layer.

The positive electrode current collector may include an aluminum thin film, but the present disclosure is not limited thereto.

### Rechargeable Lithium Battery

In embodiments of the present disclosure, a rechargeable lithium battery includes the aforementioned positive electrode, a negative electrode, and an electrolyte. As an example, the rechargeable lithium battery may include a positive electrode, a negative electrode, a separator between the positive electrode and the negative electrode, and an electrolyte solution.

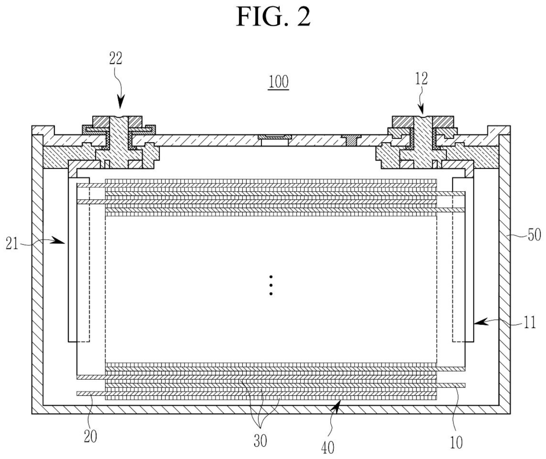

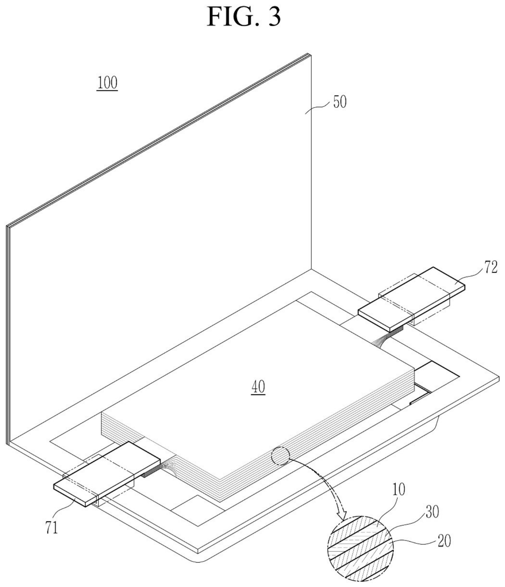

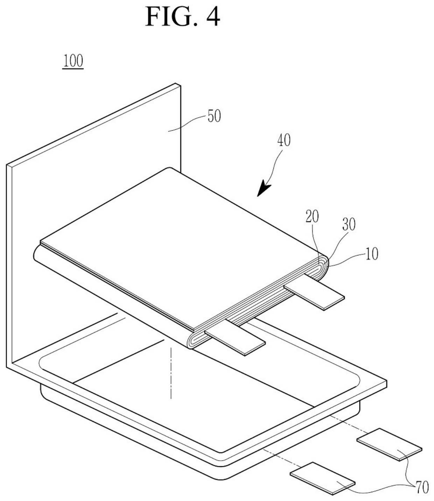

The rechargeable lithium battery may be cylindrical, prismatic, pouch, coin, etc. depending on the shape. FIGS. 1 to 4 are schematic diagrams showing rechargeable lithium batteries according to some example embodiments. FIG. 1 depicts a cylindrical battery, FIG. 2 depicts a prismatic battery, and FIGS. 3 and 4 depict a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). As shown in FIG. 1, the rechargeable lithium battery 100 may include a sealing member 60 that seals the case 50. Additionally, as shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40 to outside of the battery 100.

The rechargeable lithium battery may be rechargeable at a high voltage or suitable for being driven at the high voltage. And the rechargeable lithium battery may exhibit improved characteristics thereof under the high voltage condition.

The rechargeable lithium battery may be designed to operate in a high voltage region such that charging can proceed in a voltage range where the charging upper limit voltage is greater than or equal to about 4.0 V. The rechargeable lithium battery may provide high capacity and long cycle-life characteristics even when charged at high voltage by applying a positive electrode active material and a conductive material.

### Negative Electrode

The negative electrode includes a current collector, and a negative electrode active material layer on the current collector, and the negative electrode active material layer may include a negative electrode active material. The negative electrode may further include a binder, a conductive material, or a combination thereof.

### Negative Electrode Active Material

The material that reversibly intercalates/deintercalates lithium ions may include, for example, crystalline carbon, amorphous carbon, or a combination thereof as a carbon-based negative electrode active material.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. The silicon-carbon composite may be in the form of silicon particles with amorphous carbon coated on the surfaces of the silicon particles. The silicon-carbon composite may include secondary particles (core) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, with an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, based on 100 wt% of the silicon-carbon composite, an amount of silicon may be about 10 wt% to about 50 wt% and an amount of amorphous carbon may be about 50 wt% to about 90 wt%. In addition, if the composite includes silicon, amorphous carbon, and crystalline carbon, based on 100 wt% of the silicon-carbon composite an amount of silicon may be about 10 wt% to about 50 wt%, an amount of crystalline carbon may be about 10 wt% to about 70 wt%, and an amount of amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material that does not cause a chemical change in a battery. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The current collector may be in the form of a foil, sheet, or foam. A thickness of the current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, which is widely known to those working in the field.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within this range, the electrolyte solution has appropriate ionic conductivity and viscosity. Thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### 1. Preparation of First Positive Electrode Active Material

Ni_{0.94}Co_{0.05}Mn_{0.01}O having an average particle diameter (D₅₀) of 14 µm and LiOH were mixed to have a molar ratio of (Ni+Co+Mn):Li = 1:1.05. The mixture was then primarily heat-treated at 790 °C for 12 hours under an oxygen atmosphere to prepare a lithium nickel-based composite oxide having a composition of LiNi_{0.94}Co_{0.05}Mn_{0.01}O₂ in a form of secondary particles having an average particle diameter (D₅₀) of 14 µm in which primary particles having a particle size of about 3 µm were agglomerated.

The prepared lithium nickel-based composite oxide was pulverized by using a Hosokawa jet mill under conditions of blower of 35 Hz, AFG of 8000 rpm (AFG - Alpine Fluidised Bed Opposed Jet Mill), and air of 4 kgf/cm². Then the pulverized product was secondarily heat-treated at 660 °C for 16 hours under an oxygen atmosphere to prepare a positive electrode active material in a form of single particles having an average particle diameter (D₅₀) of 2.98 µm.

### 2. Preparation of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry. The slurry was coated on an aluminum foil current collector, dried, and then compressed to make a positive electrode.

97.5 wt% of a graphite negative electrode active material, 1.5 wt% of carboxymethyl cellulose, and 1 wt% of styrene butadiene rubber were mixed in a water solvent, thereby preparing a negative electrode active material layer slurry. The negative electrode active material layer slurry was coated on a copper foil current collector, dried, and compressed to make a negative electrode.

The positive and negative electrodes were used with a polytetrafluoroethylene separator and an electrolyte solution prepared by mixing ethylene carbonate and dimethyl carbonate in a volume ratio of 3:7 and dissolving 1 M LiPF₆ in the mixed solvent, thereby making a rechargeable lithium battery cell according to a common method.

### Example 2

A positive electrode active material and a rechargeable lithium battery cell were made in substantially the same manner as in Example 1 except that Ni_{0.94}Co_{0.05}Mn_{0.01}O having an average particle diameter (D₅₀) of 14 µm was used to prepare LiNi_{0.94}Co_{0.05}Mn_{0.01}O₂ in the form of secondary particles having an average particle diameter (D₅₀) of 14 µm and then pulverized by using a Hosokawa jet mill under conditions of blower of 35 Hz, AFG of 8000 rpm, and air of 5.0 kgf/cm² to prepare a lithium nickel-based composite oxide in the form of single particles with an average particle diameter (D₅₀) of 2.64 µm to prepare the positive electrode active material.

### Example 3

A positive electrode active material and a rechargeable lithium battery cell were made in substantially the same manner as in Example 1 except that Ni_{0.94}Co_{0.05}Mn_{0.01}O having an average particle diameter (D₅₀) of 14 µm was used to prepare LiNi_{0.94}Co_{0.05}Mn_{0.01}O₂ in the form of secondary particles having an average particle diameter (D₅₀) of 14 µm and then pulverized by using a Hosokawa jet mill under conditions of blower of 35 Hz, AFG of 8000 rpm, and air of 4.5 kgf/cm² to prepare a lithium nickel-based composite oxide in the form of single particles with an average particle diameter (D₅₀) of 2.74 µm to prepare the positive electrode active material.

### Comparative Example 1

A positive electrode active material and a rechargeable lithium battery cell were made in substantially the same manner as in Example 1 except that Ni_{0.94}Co_{0.05}Mn_{0.01}O having an average particle diameter (D₅₀) of 4 µm was used to prepare LiNi_{0.94}Co_{0.05}Mn_{0.01}O₂ in the form of secondary particles having an average particle diameter (D₅₀) of 6 µm and then pulverized by using a Hosokawa jet mill under conditions of blower of 35 Hz, AFG of 8000 rpm, and air of 4.5 kgf/cm² to prepare a lithium nickel-based composite oxide in the form of single particles with an average particle diameter (D₅₀) of 3.99µm to prepare the positive electrode active material.

### Comparative Example 2

A positive electrode active material and a rechargeable lithium battery cell were made in substantially the same manner as in Example 1 except that Ni_{0.94}Co_{0.05}Mn_{0.01}O having an average particle diameter (D₅₀) of 3.5µm was used to prepare LiNi_{0.94}Co_{0.05}Mn_{0.01}O₂ in the form of secondary particles having an average particle diameter (D₅₀) of 6 µm and then pulverized by using a Hosokawa jet mill under conditions of blower of 35 Hz, AFG of 8000 rpm, and air of 4.5 kgf/cm² to prepare a lithium nickel-based composite oxide in the form of single particles with an average particle diameter (D₅₀) of 3.36µm to prepare the positive electrode active material.

### Comparative Example 3

A positive electrode active material and a rechargeable lithium battery cell were made in substantially the same manner as in Example 1 except that Ni_{0.94}Co_{0.05}Mn_{0.01}O having an average particle diameter (D₅₀) of 3µm was used to prepare LiNi_{0.94}Co_{0.05}Mn_{0.01}O₂ in the form of secondary particles having an average particle diameter (D₅₀) of 6 µm and then pulverized by using a Hosokawa AFG jet mill under conditions of blower of 35 Hz, AFG of 8000 rpm, and air of 4.5 kgf/cm² to prepare a lithium nickel-based composite oxide in the form of single particles with an average particle diameter (D₅₀) of 2.96µm to prepare the positive electrode active material.

### Comparative Example 4

A positive electrode active material and a rechargeable lithium battery cell were made in substantially the same manner as in Example 1 except that Ni_{0.94}Co_{0.05}Mn_{0.01}O having an average particle diameter (D₅₀) of 3µm was used to prepare LiNi_{0.94}Co_{0.05}Mn_{0.01}O₂ in the form of secondary particles having an average particle diameter (D₅₀) of 6 µm and then pulverized by using a Hosokawa jet mill under conditions of blower of 35 Hz, AFG of 8000 rpm, and air of 4.0 kgf/cm² to prepare a lithium nickel-based composite oxide in the form of single particles with an average particle diameter (D₅₀) of 3.09µm to prepare the positive electrode active material.

The positive electrode active materials according to the examples and the comparative examples were measured with respect to D₅₀, D₁₀, D₉₀, a span, and a grain size. The results are shown in Table 1 below. Here, D₅₀, D₁₀, and D₉₀ was measured by using a particle size analyzer (PSA) under conditions of a pump speed 55%, sample ultrasonic wave dispersion 40 KHz, ultrasonic wave 60s, run length 60s, a refractive index ratio Sample RI 1.6, an e-factor 1.00, a sample amount 0.20 g, and a sample input dispersant 1 ml of 10% sodium hexametaphosphate.

The span was calculated as (D₉₀-D₁₀)/D₅₀.

The grain size was obtained through backscatter electron diffraction (EBSD) analysis, wherein the EBSD measurement was performed by using Bruker QUANTAX EBSD, and a sample of the positive electrode active material on the electrode current collector was ion-milled at 6 keV for 1.5 hours through cross-sectional polisher (CP) using Ilion+ by Gatan Inc. The EBSD analysis was performed at an acceleration voltage of 20 keV by using an e-flash HR EBSD detector made by Bruker Corp.

**Table 1**

| | D₅₀ (µm) | D₁₀ (µm) | D₉₀ (µm) | Span | Grain size (µm) | D₅₀ /Grain size |
|---|---|---|---|---|---|---|
| Example 1 | 2.98 | 1.87 | 4.90 | 1.01 | 1.661 | 1.794 |
| Example 2 | 2.64 | 1.54 | 4.43 | 1.10 | 1.581 | 1.67 |
| Example 3 | 2.74 | 1.58 | 4.58 | 1.10 | 1.576 | 1.739 |
| Comparative Example 1 | 3.99 | 2.55 | 6.17 | 0.90 | 1.963 | 2.033 |
| Comparative Example 2 | 3.36 | 1.96 | 5.68 | 1.11 | 1.821 | 1.845 |
| Comparative Example 3 | 2.96 | 1.59 | 5.74 | 1.40 | 1.509 | 1.962 |
| Comparative Example 4 | 3.09 | 1.54 | 5.95 | 1.43 | 2.016 | 1.533 |

### Evaluation Example 1: Surface Residual Lithium

The positive electrode active materials according to the examples and the comparative examples were measured with respect to residual lithium amounts on their surfaces by HCl titration. The results are shown in Table 2 below. Specifically, 10 g of each of the positive electrode active materials was added to 100 ml of distilled water and then stirred at 300 rpm for 30 minutes. The materials were then measured with respect to pH changes while adding HCl thereto. Because non-reaction residual lithium existed in the form of Li₂CO₃, LiOH, and the like, on the positive electrode active material surface, the titration occurred through a reaction of CO₃²⁻, OH⁻ ion, etc. with H⁺ of HCl. An amount of the added HCl solution was measured to calculate the amount of nonreacted residual lithium. In Table 2, each amount of Li₂CO₃ and LiOH was based on 100 wt% of the positive electrode active material. The total residual lithium (free Li) was measured in ppm and means 10⁻⁴ wt% based on 100 wt% of the positive electrode active material.

**Table 2**

| | D₅₀/Grain size | Li₂CO₃ (wt%) | LiOH (wt%) | Free Li (ppm) |
|---|---|---|---|---|
| Example 1 | 1.794 | 0.529 | 0.254 | 1731 |
| Example 2 | 1.667 | 0.456 | 0.371 | 1932 |
| Example 3 | 1.736 | 0.443 | 0.317 | 1750 |

In general, when using a large particle precursor there is a problem of a high surface residual lithium amount. But, as shown in Table 2, a lithium amount remaining on the surface of the examples was 2000 ppm or less, a LiOH amount was 0.5 wt% or less, and a Li₂CO₃ amount was 1.0 wt% or less based on 100 wt% of the total lithium nickel-based composite oxide. Thus, the positive electrode active materials made using a large particle precursor according to the examples had a significantly reduced surface residual lithium.

### Evaluation Example 2: Initial Charge/Discharge Capacity and Efficiency Evaluation

The rechargeable lithium battery cells according to the examples and the comparative examples were charged to an upper limit voltage of 4.3 V at a constant current of 0.2 C and to 0.05 C at the constant voltage. Then the rechargeable lithium battery cells were discharged to a cut-off voltage of 3.0 V at 0.2 C at 25 °C for initial charge and discharge. The initial charge capacity, initial discharge capacity, and a ratio of the latter to the former as efficiency are shown in Table 3 below.

### Evaluation Example 3: High-temperature Cycle-life Characteristics

After the initial charge and discharge of Evaluation Example 2, the cells were charged and discharged 50 cycles or more at 1.0 C within a voltage range of 3.0 V to 4.3 V at 45 °C to calculate a ratio of 50^{th} cycle discharge capacity to the initial discharge capacity. The results are shown in Table 3.

**Table 3**

| | D₅₀/ Grain size | 0.2 C charge (mAh/g) | 0.2 C discharge (mAh/g) | Efficiency (%) | High-temperature cycle-life (%, 45 °C, 50 cyc) |
|---|---|---|---|---|---|
| Example 1 | 1.794 | 247.8 | 221.8 | 89.5 | 97.2 |
| Example 2 | 1.667 | 247.3 | 221.7 | 89.7 | 97.7 |
| Example 3 | 1.736 | 248.0 | 222.6 | 89.8 | 96.8 |
| Comparative Example 1 | 2.033 | 246.7 | 219.4 | 88.9 | 96.0 |
| Comparative Example 2 | 1.845 | 246.8 | 219.6 | 89.0 | 96.1 |
| Comparative Example 3 | 1.962 | 248.1 | 219.9 | 88.7 | 95.3 |
| Comparative Example 4 | 1.533 | 247.2 | 217.5 | 88.0 | 94.0 |

Referring to Table 3, the examples were confirmed to implement high initial charge/discharge capacity and initial charging and discharging efficiency and simultaneously, excellent high temperature cycle-life characteristics. In other words, the cells including the positive electrode active materials according to the examples, compared with the cells including the positive electrode active materials according to the comparative examples, exhibited equivalent or excellent 0.2 C charge capacity, initial charging and discharging efficiency, high-temperature cycle-life characteristics and, in particular, exhibited 0.2 C discharge capacity of 220 mAh/g or higher. Thus, the examples had excellent characteristics.

While this disclosure has been described in connection with example embodiments, it is to be understood that the disclosure is not limited to the disclosed embodiments. On the contrary, it is intended to cover various modifications and equivalent arrangements.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode comprising:
a positive electrode active material comprising a lithium nickel-based composite oxide and being in a form of single particles,
wherein a ratio of a volume cumulative average particle diameter (D₅₀) of the positive electrode active material measured using a particle size analyzer to a grain size of the positive electrode active material measured using backscatter electron diffraction after ion milling of the positive electrode is 1.6 to 1.8.

2. The positive electrode as claimed in claim 1, wherein the lithium nickel-based composite oxide has a nickel amount of greater than or equal to 80 mol% based on 100 mol% of total metal of the lithium nickel-based composite oxide excluding lithium.

3. The positive electrode as claimed in claim 1 or 2, wherein the lithium nickel-based composite oxide is represented by Chemical Formula 1,
wherein Chemical Formula 1 is:
Liₐ₁Niₓ₁M¹_{y1}M²_{z1}O_{2-b1}X_{b1}
wherein, in Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more of Al, B, Ba, Ca, Ce, Co, Cr, Cu, Fe, Mg, Mn, Mo, Nb, Si, Sn, Sr, Ti, V, W, Y, Zn, and Zr, M¹ and M² are different from each other, and X is one or more of F, P, and S.

4. The positive electrode as claimed in any one of claims 1 to 3, wherein, based on a total 100 wt% of the lithium nickel-based composite oxide, (i) an amount of LiOH on surfaces of the single particles is 0.2 wt% to 0.5 wt%, and (ii) an amount of Li₂CO₃ on surfaces of the single particles is 0.3 wt% to 1.0 wt%.

5. The positive electrode as claimed in any one of claims 1 to 4, wherein the positive electrode active material has a grain size of 1.3 µm to 2.5 µm as measured by backscatter electron diffraction after ion milling of the positive electrode.

6. The positive electrode as claimed in any one of claims 1 to 5, wherein the volume cumulative average particle diameter (D₅₀) of the positive electrode active material is 2.0 µm to 4.0 µm as measured by a particle size analyzer; and/ wherein a diameter of particles having a cumulative volume of 10 volume% in the particle size distribution (D₁₀) of the positive electrode active material is 1.0 µm to 2.5 µm as measured by a particle size analyzer; and/or wherein a diameter of particles having a cumulative volume of 90 volume% in the particle size distribution (D₉₀) of the positive electrode active material is 4.0 µm to 7.0 µm as measured by a particle size analyzer.

7. A method for preparing a positive electrode active material, the method comprising:
(i) preparing a positive electrode active material precursor comprising a nickel-based composite hydroxide or a nickel-based composite oxide, the positive electrode active material precursor having a volume cumulative average particle diameter (D₅₀) of 9 µm to 25 µm;
(ii) mixing the positive electrode active material precursor and a lithium raw material;
(iii) subjecting the mixture of the positive electrode active material precursor and a lithium raw material to a first heat treatment to obtain a preliminary positive electrode active material in a form of secondary particles comprising a lithium nickel-based composite oxide and in which a plurality of primary particles are agglomerated;
(iv) pulverizing the preliminary positive electrode active material to prepare a pulverized product; and
(v) performing a second heat treatment on the pulverized product to obtain a positive electrode active material in a form of single particles.

8. The method as claimed in claim 7, wherein the nickel-based composite hydroxide is represented by Chemical Formula 2, and the nickel-based composite oxide is represented by Chemical Formula 3,
wherein Chemical Formula 2 is:
Niₓ₂M³_{y2}M⁴_{z2}(OH)₂
wherein, in Chemical Formula 2, 0.3≤x2≤1, 0≤y2≤0.7, 0≤z2≤0.7, and 0.9≤x2+y2+z2≤1.1, M³ and M⁴ are each independently one or more of Al, B, Ba, Ca, Ce, Co, Cr, Cu, Fe, Mg, Mn, Mo, Nb, Si, Sn, Sr, Ti, V, W, Y, Zn, and Zr, M³ and M⁴ are different from each other,
wherein Chemical Formula 3 is
Niₓ₃M⁵_{y3}M⁶_{z3}O
wherein, in Chemical Formula 3, 0.3≤x3≤1, 0≤y3≤0.7, 0≤z3≤0.7, and 0.9≤x3+y3+z3≤1.1, M⁵ and M⁶ are each independently one or more of Al, B, Ba, Ca, Ce, Co, Cr, Cu, Fe, Mg, Mn, Mo, Nb, Si, Sn, Sr, Ti, V, W, Y, Zn, and Zr, M⁵ and M⁶ are different from each other.

9. The method as claimed in claim 7 or 8, wherein the first heat treatment is performed at a temperature of 750 °C to 950 °C for 2 to 20 hours; and/ or wherein the second heat treatment is performed at a temperature of 600 °C to 900 °C for 2 to 20 hours.

10. The method as claimed in any one of claims 7 to 9, wherein in the preliminary positive electrode active material, a cumulative average particle diameter (D₅₀) of the secondary particles is 10 µm to 17 µm, and a cumulative average particle diameter (D₅₀) of the primary particles forming the secondary particles is 1 µm to 5 µm.

11. The method as claimed in any one of claims 7 to 10, further comprising forming an positive electrode that comprises the positive electrode active material,
wherein a ratio of a volume cumulative average particle diameter (D₅₀) of the positive electrode active material measured using a particle size analyzer to a grain size of the positive electrode active material measured using backscatter electron diffraction after ion milling of the positive electrode is 1.6 to 1.8.

12. The method as claimed in claim 11, wherein the positive electrode active material has a grain size of 1.3 µm to 2.5 µm as measured by backscatter electron diffraction after ion milling of the positive electrode.

13. The method as claimed in any one of claims 7 to 12, wherein the positive electrode active material having a volume cumulative average particle diameter (D₅₀) of 2.0 µm to 4.0 µm as measured by a particle size analyzer.

14. The positive electrode as claimed in any one of claims 1 to 6, further comprising:
a current collector;
a positive electrode active material layer on the current collector,
wherein the positive electrode active material layer comprises the positive electrode active material.

15. A rechargeable lithium battery comprising:
the positive electrode as claimed in claim 14;
a negative electrode; and
an electrolyte.
